# EUROPEAN PATENT APPLICATION

(11) **EP 2 159 597 A2**
(43) Date of publication of application: **03.03.2010**
(21) Application number: 09275068.6
(22) Date of filing: 01.09.2009
(51) Int. Cl.: G01S 7/292, G01S 7/34, G01S 13/10, G01S 13/36, G01S 7/02

(54) **Pulsed radar with improved short distance range resolution**

(30) Priority: 02.09.2008 US 93573 P; 28.08.2009 US 549868
(71) Applicant: Preco Electronics, Inc., Boise, Idaho 83704-8241 (US); Fadgen, John, Kuna, Idaho 83634 (US); Hayden, Douglas Todd, Boise, Idaho 83703 (US); Cole, Jonathan, Caldwell, Idaho 83605 (US); Bandhauer, Brian, Meridian, Idaho 83642 (US)
(72) Inventor: Fadgen, John, Kuna, ID 83634 (US); Hayden, Douglas Todd, Boise, ID 83703 (US); Cole, Jonathan, Caldwell, ID 83605 (US); Bandhauer, Brian, Meridian, ID 83642 (US)
(74) Representative: Wilson Gunn

(57) **Abstract**

Pulsed radar detects the presence and range of very short-range objects via small perturbations in phase and/or amplitude of relatively long duration coherently related transmit pulses. In one embodiment, echoes forming a received signal waveform from a sampling baseband radar receiver are processed at audio frequency to look for perturbations of the phase of the time-stretched received radar signal while the radar is still transmitting a long-duration pulse. In a second embodiment, the time-stretched received signal is processed to look for perturbations in the amplitude of the received radar signal. Small amplitude perturbations due to constructive and destructive interference of the transmitted and reflected signals occur in the receiver when objects are very close to the radar if the receiver is not heavily saturated. These same techniques can also be used to achieve highly accurate ranging of long-distance objects and detection of overlapping echoes from multiple objects.

## Description

### CROSS-REFERENCES TO RELATED APPLICATIONS

The present application claims benefit under 35 USC 119(e) of U.S. provisional Application No. 61//093,573, filed on September 2, 2008, entitled "Short Distance Range Resolution In Pulsed Radar," the content of which is incorporated herein by reference in its entirety.

### STATEMENT AS TO RIGHTS TO INVENTIONS MADE UNDER FEDERALLY SPONSORED RESEARCH OR DEVELOPMENT

NOT APPLICABLE

### REFERENCE TO A "SEQUENCE LISTING," A TABLE, OR A COMPUTER PROGRAM LISTING APPENDIX SUBMITTED ON A COMPACT DISK

NOT APPLICABLE

### BACKGROUND OF THE INVENTION

The present invention relates to short-range pulsed radar systems. More particularly it relates to techniques for accurately determining the range of objects detected by short-range pulsed radar systems when the object is located closer than one-half of the pulse duration times the speed of electromagnetic propagation. This is particularly relevant for long-pulse-duration pulsed radars occupying a relatively narrow bandwidth. A narrow bandwidth necessitates long radar pulse duration, but long pulse duration normally reduces range resolution, particularly in regards to very close objects.

Short-range object detection radars are experiencing increasing commercial utilization in areas such as vehicle blind spot warning and other proximity detection safety and security functions. These devices must comply with Federal Communications Commissions (FCC) and similar international regulatory body limits for radiated power and occupied bandwidth, and in order to be most generally useful and marketable, short-range object detection radar devices must be low-cost and qualify as an unlicensed radio frequency device. These constraints unavoidably limit the capabilities of such short-range radar devices.

The signal power returned from an illuminated object back to a radar device decreases by a factor of one over the range to the fourth power. This combined with a need to detect objects with a small radar cross section, such as a human, necessitate very high signal gain in the receiver electronics. In low-power, low-cost radars that are completely contained in a small package, the transmit signal feed-through or leakage into the receiver is unavoidably quite high because of the close proximity of the transmitter and receiver and the high signal gain in the receiver. In a pulsed radar system where range is determined by measuring timing delay between the transmit pulse and a receiver pulse, the radar is essentially blind during the transmit pulse duration as result of these factors.

An object very close to the radar unit may reflect a signal back into the radar receiver before the outgoing pulse has completed transmitting. This is true for any pulsed radar where the object is closer than one-half of the pulse duration multiplied by the speed of electromagnetic propagation (the speed of light). If only one object were present, then range might still be deduced by how long it takes the end of the reflected pulse to pass through the receiver compared to the known time for the end of the transmit pulse. However, for multiple objects close to the radar, detection of the nearest object becomes impractical because the echoes from further objects overlap the closer objects. In this case the end of the reflected pulse passing through the receiver is then determined by the furthest object. In order to unambiguously determine an object's range, the leading edge of the reflection pulse must be resolved. This usually requires that there be some "quiet time" in the radar receiver after the transmit pulse has finished transmitting so that the leading edge of an object can be clearly identified. Therefore, the typical minimum detectable ranging capability for short-range pulsed radars is ordinarily defined by at best one-half of the pulse duration times the speed of light, and in practice it is usually a little longer due to circuit saturation and ring-out settling time after the transmit pulse.

Because of these limitations in typical pulsed radar systems, it is ordinarily desirable to keep the pulse duration as short as possible to achieve good minimum detectable ranging capability and multiple object resolution. However, short pulse duration has the consequence of creating a wide transmission spectral bandwidth. The occupied bandwidth for simple pulsed radar is typically defined to be about 1 over the pulse width as an estimate for the approximate 10 dB bandwidth, or 2 divided by the pulse width to encompass the entire main spectral lobe. Bandwidth is necessarily tightly regulated worldwide. Presently, sufficient bandwidth for very short pulses is only allowed at millimeter-wave frequencies on a worldwide basis. There are several disadvantages for radar products operating at these higher frequencies. In particular the cost of the radio frequency electronics components is much higher at these frequencies. Required manufacturing tolerances are also much tighter further increasing complexity and cost.

The unlicensed frequency band centered at 5.8 GHz is attractive for creating relatively low-cost radar devices that can be used worldwide. At this frequency there is an abundance of off-the-shelf RF component choices available, and manufacturing costs are relatively low. However, in the U.S. the F.C.C. restricts unlicensed products operating at 5.8 GHz to operate with a maximum occupied bandwidth of 150 MHz or less for the entire main spectral lobe of the transmit signal. This restricts pulsed radar to a minimum pulse width of about 14 nanoseconds. Therefore, minimum detectable range for short-range pulsed radars operating at 5.8 GHz will ordinarily be about seven feet at best. For many short-range radar applications, this is too far, and as a result, most short-range radar devices do operate in the higher frequency bands to realize better resolution at the expense of higher complexity and cost. Therefore there exists a need for achieving high resolution even with a relatively narrowband, long-pulse radar to achieve lower complexity and lower cost.

Previous efforts to improve the short-range resolution of pulsed radars fall short of accomplishing this. For example, U.S. Pat Nos. 3,945,011 and 4,490,720 and 6,989,781 and several others, teach various versions of pulsed radars that operate in dual or multiple pulse modes. Long pulses are used for longer ranges, and shorter pulses are used for short range. However, to be used at 5.8 GHz, the spectral bandwidth of the shortest pulse must still occupy less than 150 MHz, so these techniques are not useful solutions. These methods also require that two or more different transmitted signals be generated, and that the radar must electrically switch between modes, adding circuit complexity and cost.

A variation and expansion on the above technique is disclosed in U.S. Pat. No. 6,879,281 which utilizes variable pulse duration in addition to phase modulation of long duration pulses to provide increased range resolution within the pulse via detection and correlation of the variable phase modulation. This technique still requires unacceptably wide bandwidth operation due to use of shorter pulse lengths for shorter ranges and the addition of phase modulation sidebands increasing the spectral bandwidth. Hardware and detection processing complexity is obviously increased as well.

U.S. Pat. No. 5,686,921 suggests a different dual-mode radar method for the purpose of realizing short-range object detection that at first glance appears promising. Regular pulsed radar is used in conventional time-delay measurement mode for determining the range of longer-distance objects. The radar system then electrically switches to a short range "phase-detection radar mode" to determine range of much closer objects. However, the technique is disclosed only in idealized block-diagram form, and proper operation as disclosed would require extremely high isolation of transmit and receive channels to avoid transmit signal leakage into the receiver path spoiling the simple "phase detection" technique using an exclusive OR logic gate. In this invention, the Tx modulation envelope is exclusive OR'd with the Rx modulation envelope to create a logic low signal that coincides with receive rising edge overlapping the active high transmitter envelope line feeding into the XOR gate. It is suggested that the receive envelope rising edge occurring during the transmit pulse time might be detected in this manner. However, this would require that the receive line into the XOR gate be quiet (logic 0) during the transmit time until a receive echo is present. Even if this were realizable in practice, the method throws away the RF carrier information by utilizing only the carrier modulation envelope signal and does still require electrically switching between two modes of operation increasing cost and complexity.

If very high transmit and receive channel isolation were indeed realizable, then the invention described in U.S. Pat. No. 7,030,807 could be better used for very close object detection and high range resolution. This invention analyzes a ratio of the transmit pulse envelope rising edge (or falling edge) measured at two closely-spaced time intervals. This same ratio is then looked for within the receiver echo signal envelope to pinpoint the same narrow portion of the envelope observed in the original transmit pulse. In this manner a very accurate time-delay measurement between transmitted signal time and received signal time might be obtained. The ratio method is said to allow for accurate identification of a narrow portion the beginning or end of the receive pulse envelope. This does not solve the existing problems in that transmit signal feed-through to the receiver still destroys the ability to measure the echo rising edge ratio for close objects, and use of the falling edge will only give the distance to the furthest object of a group of close objects as previously discussed. This technique also fails if there is any receive envelope distortion present, from a complex object shape for example, that creates multiple overlapping reflections that are very closely spaced.

An even more accurate version of the above method is taught in U.S. Pat. No. 7,379,016, which describes a method of identifying the zero crossing of a single cycle of RF carrier within a pulse burst. This technology is of particular interest in that it is based upon a method of pulsed radar known as Time-Domain-Downconversion, or Integrated Sampling, or Strobed Radar, or Baseband Radar, where the RF carrier signal is periodically sampled and time-stretched by a sampling gate signal that is clocked at a slightly longer rate than the transmit pulse repetition interval. The resulting time-stretched and sampling-recreated carrier signal can be accurately processed via low-cost electronics. This makes it possible to do zero-crossing detection of the sinusoidal RF carrier using conventional low-speed logic gates and operational amplifiers. However, the disclosed technique is entirely hardware logic-gate based and still requires that there be separation between the transmitted pulse burst and the received pulse burst for proper logic gate function to occur. Objects close enough to return an echo signal into the receiver while the radar is still transmitting cannot be detected and resolved in the disclosed manner. Hardware complexity is also a cause for concern since zero-crossing detection is accomplished entirely in hardware by generating a series of logic timing signals.

The inventor of U.S. Pat. No. 4,521,778 recognized many years ago the trade-off between the wide-bandwidth required for short pulses and the high cost and complexity of operating at such wide bandwidths. The inventor also recognized some of the potential advantages that arise via a time-stretching method of downconversion of the RF carrier. In response, this patent teaches an alternative method of time-expansion using very conventional radar RF electronics such as dielectric resonator oscillators and diode mixers to accomplish the time-scaling, instead of the integrated sampling technique more typically used at present. Time-stretching is realized in this invention when a transmit pulse train is mixed in the receiver with a local oscillator signal that is gated on/off by a pulse train of slightly lower repetition frequency. Time expansion of the IF signal is the result of strobing the mixer in this manner. However, this invention only utilizes the time-expansion concept to effectively shrink the wide RF bandwidth of 1 nanosecond pulses into a much smaller IF bandwidth thereby reducing cost of electronics components. Very wide RF bandwidth is still required because of the short pulse, and very close range resolution is still limited by the 1 nanosecond pulse width in accordance with nominal close-object detection resolution equation noted above (one-half pulse width multiplied by speed of propagation). Hardware complexity is also high.

A series of U.S. patents assigned to Mitsubishi Denki KK (6,590,522 and 6,606,054 and later versions of the same inventions 6,646,592 and 6,657,583) describe possible methods of extracting the overlapping receive pulse from the leakage transmit pulse seen in the receiver. However, these inventions each first downconvert the amplitude-modulated carrier (typically pulse modulation) to recover the modulating envelope before processing. Hence, the small RF carrier perturbations are themselves lost in this technique. Instead, large perturbations in the modulation envelopes are detected via hardware integrator and/or differentiator stages which act to emphasize and isolate envelope discontinuities that might result from overlap of transmitter leakage and received radar echoes. This technique is hardware intensive which adds complexity and cost. It is stated that it is very desirable to avoid receiver saturation during transmission, which could mask envelope discontinuities. The immediate AM envelope recovery unavoidably results in loss of sensitivity and signal information due to small carrier phase perturbations and Doppler shift.

There is still significant need for a low-cost, low-complexity, highly sensitive, pulsed radar system that can resolve the range of objects very close to the radar, said objects causing the echo signal to overlap the transmit leakage signal in the receiver. What is needed is a short-range radar device that can offer a minimum detectable range much less than the usual limit for pulsed radars (one-half of the pulse duration multiplied by the speed of electromagnetic propagation) and allow use of the worldwide 5.8 GHz band to create a short-range radar device that offers such short-range detection at low cost. What is also needed is to increase range resolution of longer distance objects and distances between objects whose echoes might overlap because of close proximity and/or long pulse duration.

### SUMMARY OF THE INVENTION

Very short-range object detection and high-resolution ranging is accomplished in pulsed radar by using a sampling receiver to time-stretch the microwave radar carrier signal within the radar receiver. The resulting audio frequency signal is a replica of the microwave carrier with all characteristics well preserved, but time-stretched. This signal can then be very inexpensively amplified and filtered via conventional audio signal processing hardware and can then be successfully processed in a conventional low-cost microprocessor with audio signal processing capability to look for small to large phase and amplitude features of the carrier waveform. This results in timing detection resolution capability of much less than a single microwave carrier cycle (i.e., picoseconds timing resolution is possible).

The inventive technique employs coherent pulsed radar to cause the electromagnetic propagation time (speed of light) to appear to be stretched by a factor proportional to the down-conversion frequency scaling, typically a value between 10,000 and 10,000,000. This results in object reflection ranging delay timing that occurs in terms of tens of microseconds to tens of milliseconds instead of nanoseconds, and it results in highly accurate preservation of the original microwave carrier features including phase and amplitude perturbations as well as Doppler shift, so long as the pulses remain coherent and repetitive over the sampling period.

When no short-range objects exist near the radar source and receiver, an undisturbed transmit pulse is monitored via leakage coupling into the radar receiver circuitry. This establishes a target-free baseline for analog-to-digital audio sampling and signal storage in for example an inexpensive microprocessor system. Reflections from close objects that enter the receiver while the radar is still transmitting a pulse, and reflections from closely spaced objects at distances that overlap each other in the receiver result in small phase and/or amplitude perturbations at the points in the carrier signal where overlapping begins.

In the case of minimum detectable range to the closest object, the timing of the earliest perturbation within the transmit leakage signal provides indication of the range to the nearest object. Similarly, multiple closely spaced objects at some distance from the radar that result in overlapping reflections in the radar receiver can be discerned via phase and/or amplitude discontinuities in essentially the same manner. Again, because the microwave carrier is well preserved and time-stretched, very small perturbations of much less than the time of a single carrier cycle can be resolved (i.e., picoseconds discontinuity resolution). This technique further allows for the possibility of extracting object Doppler information via simple signal processing of the audio reflection signal to acquire carrier spectral content.

Specific system details are provided for a 5.8 GHz pulsed radar system capable of resolving and ranging objects as close as twelve inches from the radar with a plus or minus twelve inch ranging accuracy over the entire sweep range. While the specific example embodiment described utilizes 5.8 GHz and is focused upon improving very short detection range, those skilled in the art will appreciate that the system is completely frequency scalable, including pulse duration times, and extendible in use for very high resolution of objects at long distances. It should also be appreciated that this method could be used for any form of pulsed signal carrier such as laser (LIDAR) and ultrasonics where the received signal can be time-stretched via integrated sampling techniques most applicable to each type of signal.

A comprehensive-description of an example embodiment of the invented pulsed radar system capable of short range object detection and ranging of much less than one-half of the pulse duration times the speed of electromagnetic propagation is now presented by reference to the following accompanying figures

### BRIEF DESCRIPTION OF THE DRAWINGS

**Figure 1** is a block diagram of an example embodiment of the complete pulsed radar system with integrated sampling downconverter and microprocessor capable of audio digitizing and signal processing.

**Figure 2** is a detailed schematic diagram of the signal processing portion of the radar receiver coming just after the generic RF portion implementing integrated sampling down-conversion.

**Figures 3A-3D** show actual examples of down-converted microwave carrier signals which have been time-stretched into audio frequencies (about 5 KHz) from the receiver of a 5.8 GHz short-range radar system with approximately16 nanosecond transmit pulse. (A) The entire unperturbed transmit pulse is shown (no objects present). (B) Object with radar-cross-section (RCS) of about 1 square meter located 4 feet from radar. (C) Object with 1 m² RCS located 6 feet from radar. (D) Object with 1 m² RCS located 8 feet from radar.

**Figures 4A-4D** show only the beginning portions of carrier waveforms like those shown in Figure 2 to emphasize efficacy for extremely close object detection. (A) The unperturbed transmit pulse with no objects present. (B) Object with radar-cross-section (RCS) of about 1 square meter located 1 foot from radar. (C) Object with 1 m² RCS located 2 feet from radar. (D) Object with 1 m² RCS located 3 feet from radar.

**Figure 5** is a block diagram flow chart of a preferred algorithm for implementing phase detection of perturbations of the transmit pulse seen in the receiver.

**Figure 6** is a block diagram flow chart of a preferred algorithm for implementing amplitude detection of perturbations of the transmit pulse seen in the receiver.

### DETAILED DESCRIPTION OF THE INVENTION

While the focus of the invention description herein is on very close object detection and ranging practice, the described invention can be equally well used to realize enhanced ranging resolution for longer distance objects as well as detection of multiple object reflections overlapping in the receiver.

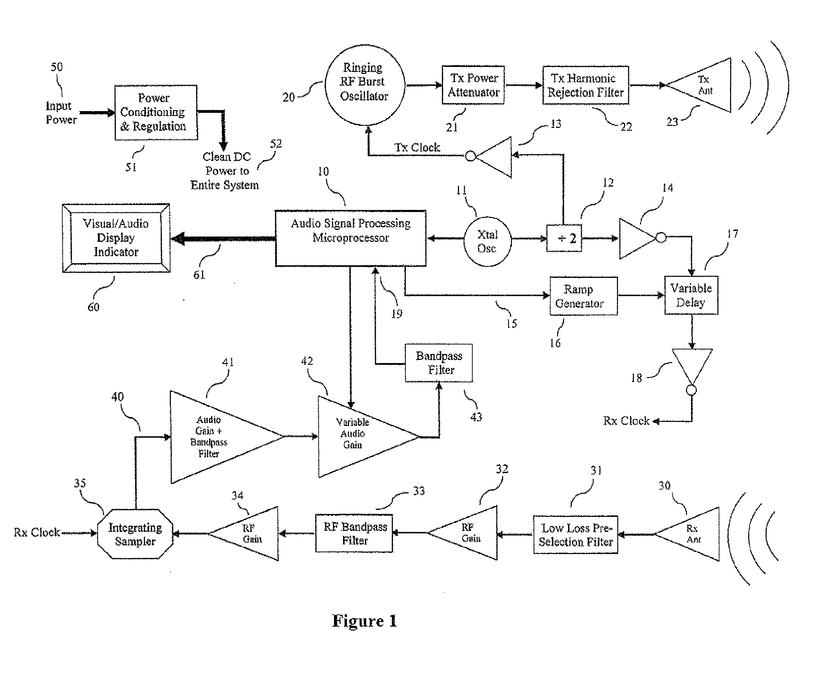

**Figure 1** shows a detailed functional block diagram of the radar system. The microprocessor **10** is at the heart of the radar system providing timing control, signal processing and analysis of the receiver signal and communication with a display and/or enunciator device **60**. The microprocessor **10** can be any of a wide variety of low-cost products commonly available and which provide built-in audio signal digitization and mathematical signal processing capabilities.

Crystal oscillator **11** provides clocking signals for the microprocessor **10** as well as for the transmitter oscillator **20** and the receiver integrating sampler **35**. The frequency of oscillation is a typically a few Megahertz, 5 MHz for example. Other types of oscillators besides crystal-based can also be used, such as a ceramic resonator selected to achieve low phase noise in order to optimize the quality of integrated sampling. The oscillator signal **11** is passed through clock divider circuit **12** to reduce the clock frequency to a speed whereby the pulse repetition interval generated by the output from clock divider **12** creates pulse timing sufficient to accomplish the desired transmit pulse repetition rate and object search range timing, while still minimizing potential for long-distance aliasing. For example, a 5 MHz oscillator divided by 2 yields 2.5 MHz, or a pulse interval of 400 nanoseconds. This allows for a maximum possible object search range of over 100 feet and range aliasing from long distance objects possibly occurring only when the object is greater than 197 feet (pulse interval times speed of light divided by 2).

The clock divider signal **12** is buffered by inverter **13** whose output is defined to be the "Tx Clock" signal driving the transmit oscillator **20.** Buffer **13** can optionally be configured to allow for enabling/disabling by microprocessor **10** to allow for complete transmitter on/off control via the microprocessor (not shown in-Figure 1). The Tx Clock drives the transmitter oscillator **20**, which is most efficiently and inexpensively realized as a high-frequency transistor loaded with a resonant reactive circuit such that pulsing the transistor ON then OFF results in the transistor "ringing" at the load circuit natural resonance microwave frequency. This configuration has the added advantage of creating pulse bursts of microwave signal that are phase coherent because the circuit rings the same way each time due to the nature of this type of circuit. The microwave burst is then attenuated **21** to limit power as required by regulatory agencies and also filtered **22** to reduce harmonic content to that allowed by various regulatory agencies. Attenuator **21** can be realized using any of the well-known resistive loss circuits commonly used in high frequency circuit design, and filtering **22** is most typically done via well-known microstrip or stripline filter techniques. Finally, the transmit burst is radiated in accordance with the intrinsic characteristics of microwave antenna **23** selected as most suitable for the particular radar application, for example a microstrip patch array or waveguide slot antenna.

Echoes from short-range objects enter the microwave receiver antenna **30** which is normally of the same type as the transmit antenna **23**. It is also possible to configure the system such that the transmit antenna **23** and the receive antenna **30** are actually one and the same antenna shared and duplexed using well known techniques such a microwave circulators or directional couplers. This is a particular advantage of the present invention because such antenna duplexing typically maximizes transmit leakage signal to the receiver, which renders prior art radar designs completely blind during the transmit pulse burst as previously discussed.

The receive signal from antenna **30** first passes through preselection filter **31** which attenuates out-of-band signals while maintaining very low insertion loss so that the receiver noise figure is not significantly increased. The microwave receive signal is then amplified **32,** further bandpass filtered **33**, and then further amplified **34** to achieve sufficient signal levels and signal-to-noise ratio for the integrating sampler **35** to output useful signals with satisfactory amplitude. The receiver filters **31** and **33** are most typically realized via well-known microstrip or stripline filter techniques, and microwave amplification **32** and **34** is accomplished through either conventional and well-known RF transistor amplifier design or by utilizing off-the-shelf MMIC devices that are commonly available for low cost at lower microwave frequencies such as for 5.8 GHz.

Integrating sampler **35** may be implemented by any well-known means that results in a high quality, low-noise audio signal at the output that is an accurate time-stretched recreation of the microwave radar signal. This technology dates to the 1960's with the advent of sampling oscilloscopes and has taken on many forms and refinements since then. One common technique for integrated sampling, which is discussed here for illustrative purposes, utilizes a dual pair of back-to-back high-speed Schottky diodes that are strobed by a very fast transient pulse resulting at the output of a capacitively coupled step-recovery diode. The SRD pulse is clocked by the Rx clock output from buffer **18** and briefly forward biases the Schottky diodes once each pulse repetition cycle. A capacitor at the audio output side of the integrating sampler **35** then briefly charges during the Schottky diode forward biasing time thus acquiring one sample of the microwave waveform present at the Schottky diodes.

Time-stretching reconstruction of the entire microwave waveform present at the receiver antenna **30** occurs via sampling over and over during a complete time-delay sweep-period. The time delay and sweep period are defined in this illustrative example by ramp generator **16** which drives variable delay circuit **17**. Ramp generator **16** is controlled by microprocessor **10** via bus line **15**. This control bus **15** may be as simple as one I/O line that simply resets an analog ramp generating circuit at the start of each range sweep cycle, or the bus **15** might be a set of digital output lines that drive a digital-to-analog converter to achieve the desired ramp waveform. The ramp waveform **16** controls variable delay circuit **17** that might be realized in many different ways known to those skilled in the art. It is the relative receive versus transmit clocking delay result that is significant. Microprocessor control **15,** ramp generator **16**, and variable delay **17** are used to precisely delay the clock output from buffer **14** driven by clock divider **12**. The desired and necessary result is that the Rx Clock edge (rising or falling edges can be used as the sampling trigger) is delayed a little longer than the Tx Clock edge resulting in each sample cycle at the integrated sampler **35** occurring slightly later each pulse repetition cycle. This objective may, of course, be achieved in ways other than the example embodiment illustrated in **Figure 1**. For example, two free running oscillators of slightly different frequencies might also be used to accomplish the incrementally increasing time delay between transmit and receive clocking. In the example embodiment shown, an incremental delay circuit **17** is selected to achieve the desired microwave carrier signal time stretching and corresponding audio frequency output. For example, to create a 5 KHz audio signal from a 5.8 GHz microwave signal requires time scaling of 1.16 million, which results when an incremental clock delay of 0.34 picoseconds is accomplished when using a pulse repetition frequency of 2.5 MHz (pulse repetition rate divided by scale factor). High accuracy is desired in this incremental delay circuit in order to achieve the highest quality integrated sampling results (clean, undistorted audio signal replica of the microwave carrier).

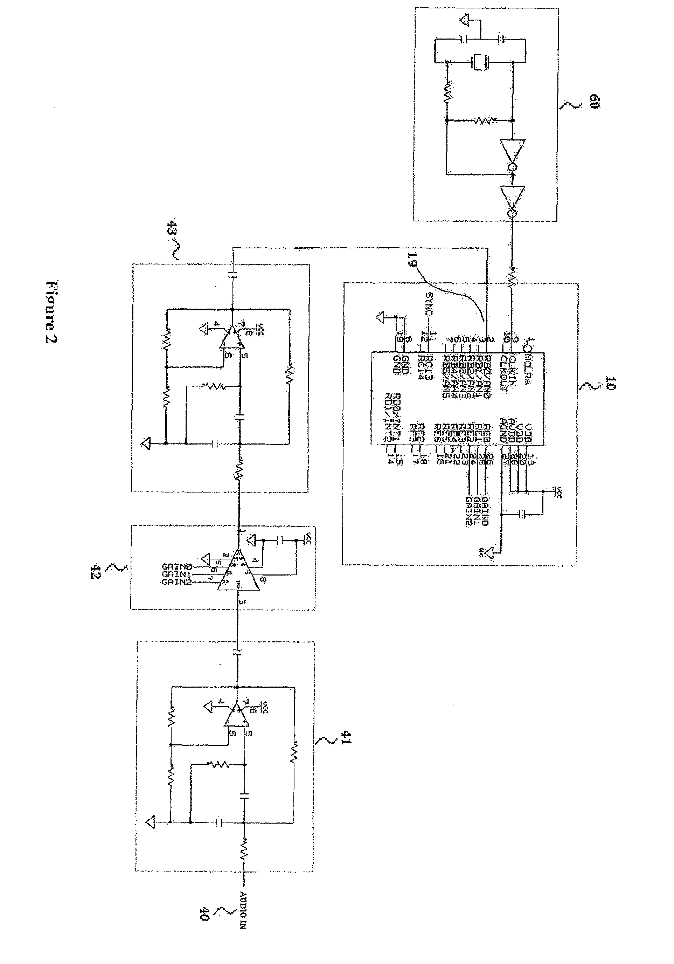

The low-level audio waveform resulting from integrating sampler **35** passes through a series of audio gain stages **41** and **42** and bandpass filtering **41** and **43** before entering microprocessor **10** via analog input **19**. This ultra-low cost, very simple circuitry that is a unique advantage of the present invention is described in more detail with respect to the description of **Figure 2** below.

The radar system should accept a wide range of direct current voltage levels at the input **50** to allow for the most universal installation capability. This raw DC power is carefully conditioned by well-known circuitry methods **51** to protect the radar electronic components and to create a very stable and clean system power supply signal **52**. Great care is taken in this portion of the system since undesirable AC content or modulation content or glitches of any kind may have some detrimental effect on the signal-to-noise ratio and the microwave-to-audio conversion efficiency of the audio signal coming from the integrating sampler **35.**

The radar system employs a suitable audible and/or visual indicator circuitry **60** to alert the operator of object presence, range to closest object or multiple objects, and system status and/or diagnostics. Microprocessor **10** controls this aspect of the system via interfacing with the enunciator device **60** through communications bus **61,** which might be an automotive CAN bus, for example, or any other suitable communications configuration including wireless link.

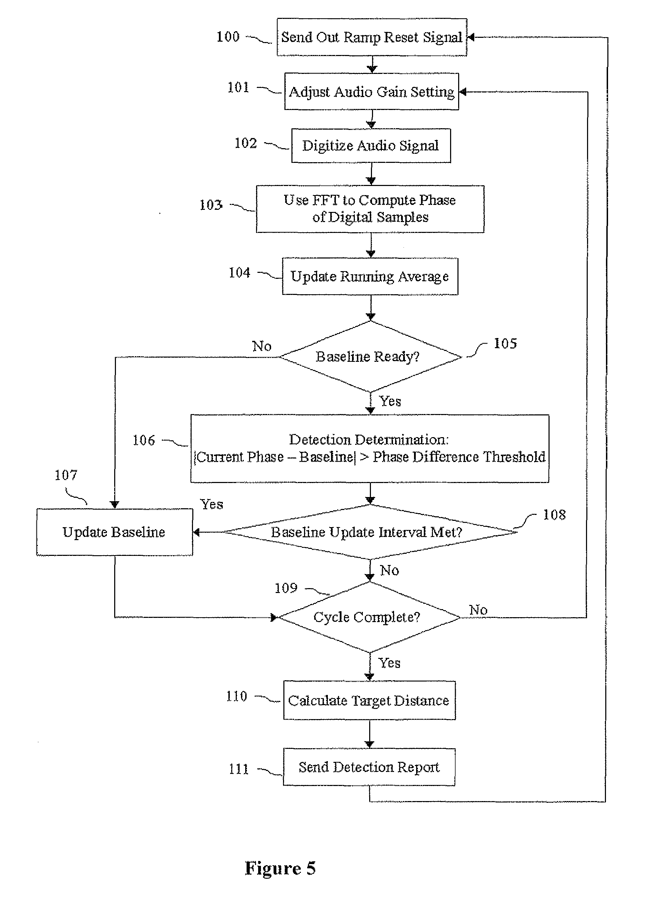

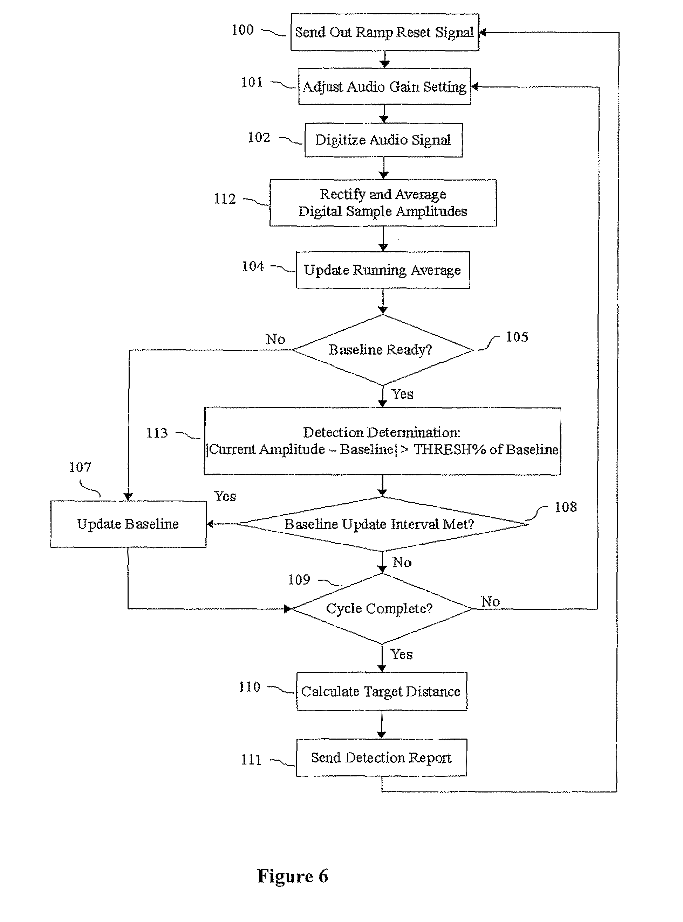

Referring now to **Figure 2**, detailed circuitry for the analog signal path of the audio signal exiting integrating sampler **35** is shown to clearly illustrate the extreme simplicity and low-cost advantage resulting from the present invention. The signal first passes through the combination bandpass filter and signal gain stage **41**, which in this illustrative example is realized using the well-known Sallen-Key single op-amp bandpass filter configuration. For a 5 KHz audio signal, -3 db filter bandwidth may typically be set to be about +/- 1 KHz with a nominal gain of about 10 dB in this first stage. The audio signal then passes to variable gain stage **42**, which is controlled by microprocessor **10**. Gain is adjusted here as a function of range-sweep delay to partially compensate for the range-dependent radar echo power which decreases as the inverse of range raised to the 4^{th} power. Because of the time-scaling resulting from integrated sampling, range timing occurs now in milliseconds rather than nanoseconds, so ordinary audio components may be successfully used such as the variable gain amplifier **42** with digital control shown. Finally, the audio signal passes through yet another Sallen-Key op-amp bandpass filter **43.** Finally, the signal enters one of the analog-to-digital converter ports in audio processing microprocessor **10** where the audio radar signal is completely digitized and stored for further signal processing as described below with reference to **Figure** 5 and **Figure 6** example embodiments.

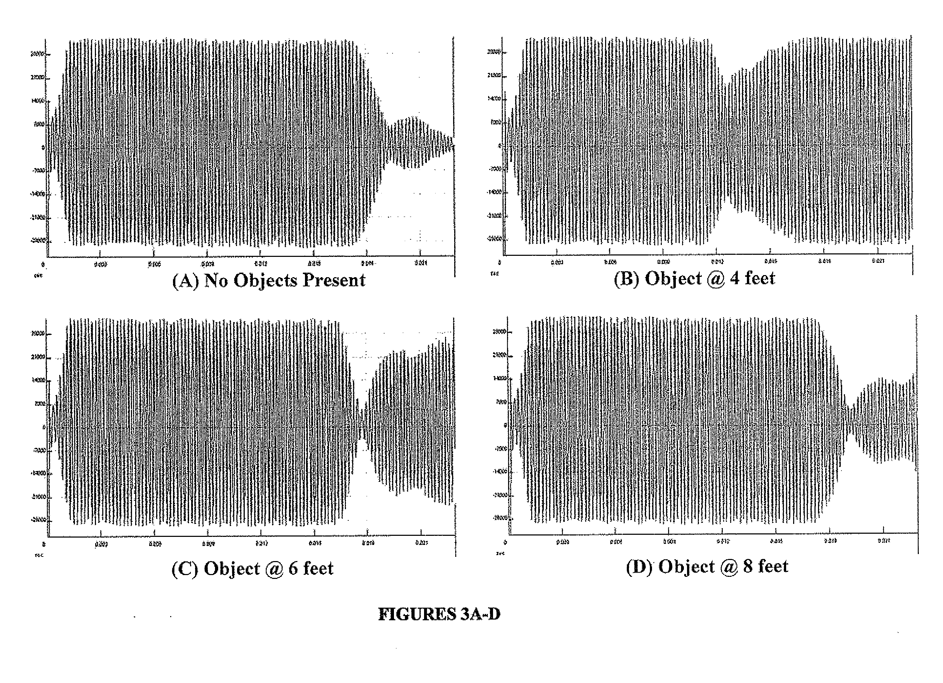

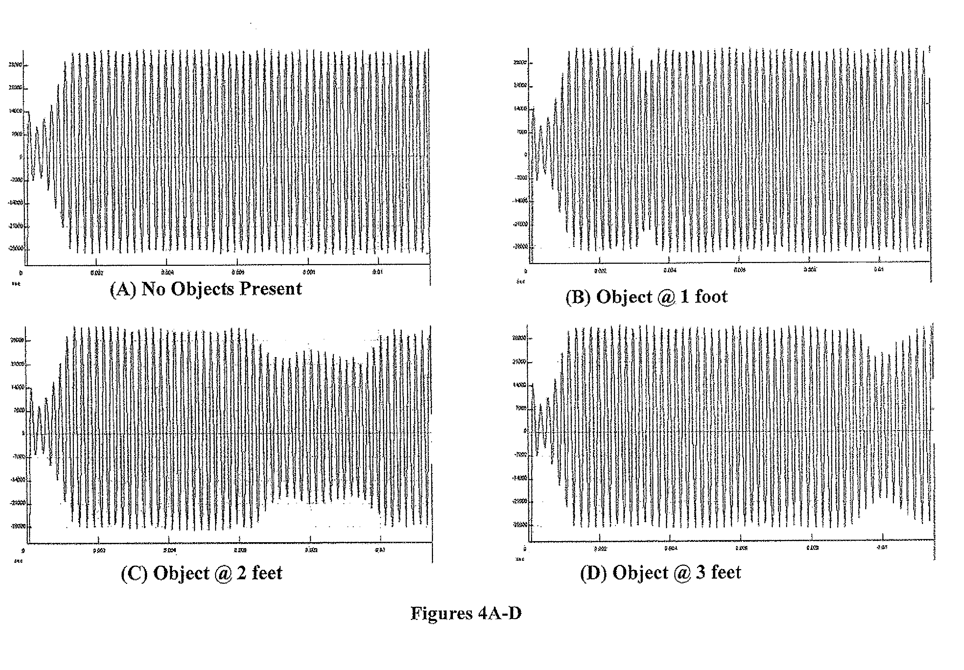

**Figures 3A-3D** and **Figures 4A-4D** show actual examples of audio waveforms which are seen at the output of **43** before entering microprocessor **10**. **Figure 3(A)** shows the entire transmit pulse leakage signal seen by the radar receiver system. In this example, the 5 KHz audio signal is low-level saturated upon entering the microprocessor **10**. **Figures 3(B)**, **3(C)** and **3(D)** show examples of the resulting perturbation of the transmit leakage signal when a small object with radar cross section approximately equivalent to a human is presented near the radar at 4 feet, 6 feet and 8 feet respectively. Both phase and amplitude changes in the waveform are evident. **Figure 4(A)** shows a time-expanded view of **Figure 3(A)** to view only the beginning portion of the transmit leakage signal in the radar receiver. **Figures 4(B), 4(C)** and **4(D)** show examples of the resulting perturbation of the transmit leakage signal when a small object with radar cross section approximately equivalent to a human is presented very near the radar at 1 foot, 2 feet and 3 feet respectively. The resulting waveform perturbations are exploited via phase detection or amplitude-only detection signal processing as described in **Figure 5** and **Figure 6** respectively.

**Figure 5** illustrates a flow-chart diagram of an example signal processing algorithm useful for implementation of phase detection of perturbations in the long-pulse-duration audio radar signals entering microprocessor **10** at analog input port **19**. The algorithm divides each range sweep cycle into small time segments, on the order of a 0.5 to 1 millisecond for example, but much smaller time segments may be used for finer resolution as desired. Each of these time segments is processed to look for small differences in phase when compared to a baseline phase value. A range sweep cycle begins **100** by the microprocessor **10** sending a signal to reset analog ramp generating circuit **16.** Each time segment within the range sweep cycle begins 101 by adjusting the variable audio gain amplifier **42** to partially compensate for the range-dependent radar echo power which decreases as the inverse of range raised to the 4^{1h} power. Following the gain adjustments, the audio radar signal is digitized **102**. Because of the time-scaling resulting from integrated sampling, the audio radar signal can be digitized by use of simple analog-to-digital port **19** on the microprocessor **10.** Once the audio radar signal is digitized, then a Fast Fourier Transform (FFT) algorithm is applied to compute the phase **103.** Note that Doppler information is then also available if desired. A running average of the computed phase is kept in order to reduce the effects of system noise **104**. If a phase baseline has already been collected **105,** then the absolute value of the current phase minus the baseline phase is compared against a phase difference threshold **106**. If the result is greater than the threshold, then the algorithm determines that a target detection has occurred. If a phase baseline has not yet been collected 105 or if a sufficient amount of time has expired since the phase baseline was last updated **108,** then the phase baseline values are updated with the current phase values **107**. The phase baseline should be updated periodically to compensate for drift in phase due to temperature variations or other causes. If the entire range sweep cycle is complete **109**, then the target distance is computed based on detection time **110** and the detection information is sent **111** to the visual/audio display indicator **60**. The entire process then repeats by sending the ramp reset signal **100**.

**Figure 6** illustrates a flow-chart diagram of an example signal processing algorithm useful for implementation of the more simple amplitude-only detection embodiment of the present invention. The amplitude-only detection algorithm only differs from the phase-based detection algorithm described above in three areas. First, instead of using FFT to compute the phase of the audio signal **103,** the digitized audio signal amplitudes for each time segment are rectified and averaged **115.** Second, instead of using phase values for the baseline, the baseline is comprised of rectified and averaged amplitudes. Third, the amplitude-only algorithm determines if a target detection has occurred by checking if the absolute value of the current amplitude minus the baseline amplitude is greater than a certain threshold percentage of the baseline amplitude **118.** As with the phase-based algorithm, the amplitude baseline should be updated periodically to compensate for drift in amplitude due to temperature variations or other causes.

Even if the phase or amplitude baseline updating occurs in the presence of a nearby object under static conditions (no relative motion for a long period of time), as soon as any relative motion occurs between the radar source/receiver and the object, object detection is realized. Note that only a very small relative motion is sufficient since the microwave carrier wavelength is only 2 inches (5 cm) at 5.8 GHz, and only a fraction of wavelength change is required to cause phase shift and/or amplitude constructive/destructive interference changes.

While the invention has been described herein with reference to exemplary preferred embodiments thereof, those skilled in the art will be able to make various modifications to the described embodiments of the invention without departing from the true spirit and scope of the invention.

## Claims

1. A pulsed radar system comprising:
a transmitter subsystem operative to transmit pulse bursts of microwave carrier waves over multiple cycles as a microwave carrier, wherein each transmitted pulse burst is coherent with an immediately prior pulse burst to generate a repetitive microwave probe signal;
a receiver subsystem operative to receive echoes of the transmitted pulse bursts reflected off of objects, said receiver subsystem being operative to sample and integrate over an extended sampling period to down-convert and time-stretch the repetitive microwave probe signal into a time-stretched echo signal waveform in an audio frequency range; and
a processor subsystem operative to control system timing, signal analysis and output of information, including analog-to-digital conversion and digital signal processing of the received audio frequency waveform, said processor subsystem being configured to process the received audio frequency waveform and to detect phase perturbations within the audio frequency waveform to extract ranging information in the presence of overlapping transmitter leakage signals, of overlapping multiple radar echoes from multiple objects, and of echoes intrinsic to single object characteristics located at distances closer than a distance corresponding to one-half of a pulse duration multiplied by the speed of electromagnetic propagation

2. The system according to claim 1 further comprising an audio filtering and gain subsystem configured to partially vary gain to partially compensate for range-dependence power loss of the time-stretched echo signal waveform.

3. The system according to claim 1 or claim 2 further comprising a shared antenna for transmitting the pulse bursts and receiving the echoes.

4. A pulsed radar system comprising:
a transmitter subsystem operative to transmit pulse bursts of microwave carrier waves in multiple cycles of a microwave carrier, each transmitted pulse burst being coherent with an immediately prior pulse burst to generate a repetitive microwave probe signal;
a receiver subsystem operative to receive echoes of the transmitted pulse bursts reflected off of nearby objects, said receiver employing integrated sampling to downconvert and time-stretch the repetitive microwave signal into an audio signal; and
a microprocessor-based subsystem configured to control analog-to-digital conversion and signal processing of the audio signal waveform, said microprocessor subsystem configured to process and detect amplitude perturbations within the audio signal to extract ranging information closer than one-half of a pulse duration multiplied by the speed of electromagnetic propagation in order to detect short-range objects at distances much closer than distances corresponding to one half of a pulse duration multiplied by the speed of electromagnetic propagation.

5. The system according to claim 4 further comprising an audio filtering and gain subsystem configured to partially vary gain to partially compensate for range-dependence power loss of the time-stretched echo signal waveform.

6. A method for detecting short-range objects comprising:
transmitting pulse bursts of microwave carrier waves in multiple cycles of a microwave carrier, each transmitted pulse burst being coherent with an immediately prior pulse burst to generate a repetitive microwave probe signal;
receiving echoes of the transmitted pulse bursts reflected off of nearby objects, while employing integrated sampling to downconvert and time-stretch the repetitive microwave signal into an audio signal; and
detecting amplitude perturbations within the audio signal to extract ranging information closer than one-half of a pulse duration multiplied by the speed of electromagnetic propagation in order to detect the short-range objects at a distance much closer than distances corresponding to one half of a pulse duration multiplied by the speed of electromagnetic propagation.

7. The method according to claim 6 further comprising partially varying gain to partially compensate for range-dependence power loss of the time-stretched echo signal waveform.
